# FASCICULE DE BREVET EUROPEEN

(11) **EP 2 616 228 B1**
(45) Date de publication et mention de la délivrance du brevet: **23.03.2016**
(21) Numéro de dépôt: 11773084.6
(22) Date de dépôt: 14.09.2011
(51) Int. Cl.: B29C 49/78, B29C 49/12, B29D 22/00, B29K 67/00

(54) **PROCÉDÉ DE FABRICATION D'UN RÉCIPIENT À PARTIR D'UNE ÉBAUCHE, AVEC RÉTROACTION EN FONCTION D'UN MINIMUM DÉTECTÉ DE PRESSION**
VERFAHREN ZUR HERSTELLUNG EINES CONTAINERS AUS EINER VORFORM MIT AUF EINEM ERKANNTEN MINIMALDRUCK BERUHENDEM FEEDBACK
METHOD FOR MANUFACTURING A CONTAINER FROM A PREFORM, WITH FEEDBACK DEPENDING ON A MINIMUM PRESSURE DETECTED

(30) Priorité: 16.09.2010 FR 1003690
(43) Date de publication de la demande: 24.07.2013
(73) Titulaire: Sidel Participations, 76930 Octeville sur Mer (FR)
(72) Inventeur: DEAU, Thierry, F-76930 Octeville Sur Mer (FR); GENDRE, Julien, F-76930 Octeville Sur Mer (FR); MAILLOT, Isabelle, F-76930 Octeville Sur Mer (FR)
(74) Mandataire: Siloret, Patrick
(86) Numéro de dépôt international: PCT/FR2011/052107
(87) Numéro de publication internationale: WO 2012/035260

(56) Documents cités:
- FR-A1- 2 909 304
- US-A- 4 042 657

## Description

L'invention a trait à la fabrication des récipients par soufflage ou étirage soufflage, à partir d'ébauches en matière plastique.

Pour fabriquer un récipient, on peut mettre en oeuvre une étape unique de soufflage, ou plusieurs étapes de soufflage. Dans le premier cas, on part d'une préforme obtenue par injection, que l'on chauffe d'abord à une température supérieure à la température de transition vitreuse de la matière. Puis on introduit la préforme ainsi chauffée dans un moule, avant d'y injecter un fluide (notamment un tel que de l'air) sous pression pour obtenir directement le récipient final. Dans le deuxième cas, en partant de la préforme on effectue un premier soufflage, qui conduit à un récipient intermédiaire, qui est lui-même réchauffé puis soufflé à nouveau pour obtenir le récipient final.

Par « ébauche », on entend désigner à la fois les préformes injectées, et les récipients intermédiaires obtenus à l'issue d'une première opération de soufflage à partir d'une préforme, et destinés à subir au moins un second soufflage.

La technique de l'étirage soufflage consiste, outre le soufflage de l'ébauche (préforme ou récipient intermédiaire), à étirer celle-ci au moyen d'une tige coulissante, afin notamment de minimiser le désaxement du récipient et d'uniformiser autant que possible la répartition de la matière.

Le soufflage comprend lui-même plusieurs opérations successives d'injection d'un gaz dans l'ébauche. Une première opération, dite de présoufflage, consiste à injecter dans l'ébauche un gaz sous une pression réduite (dite de présoufflage, généralement comprise entre 5 et 16 bars). Une seconde opération, dite de soufflage proprement dite, consiste à injecter dans l'ébauche un gaz sous haute pression (dite de soufflage, généralement supérieure à 25 bars, et couramment comprise entre 30 et 35 bars). C'est pendant l'opération de présoufflage qu'est réalisé l'étirage de l'ébauche, le soufflage n'intervenant qu'ensuite.

Dans un contexte de production industrielle, les cadences de fabrication atteignent plusieurs dizaines de milliers de récipients par heure et par machine, qui comprend ordinairement une série de moules montés à la périphérie un carrousel tournant). Le temps de cycle, entre l'instant où l'ébauche est introduite dans le moule et l'instant où le récipient formé est éjecté du moule, est de quelques secondes. L'opération de présoufflage elle-même dure quelques dixièmes de seconde seulement.

Une mauvaise répartition de la matière est un défaut récurrent constaté sur les récipients. Il ne s'agit pas nécessairement de veiller à ce que l'épaisseur de la paroi du récipient soit constante, car dans certains cas il peut être souhaitable d'épaissir certaines zones, en particulier celles destinées à subir des contraintes importantes (notamment à proximité du fond). Il s'agit plutôt de veiller à ce que l'épaisseur de matière corresponde au cahier des charges du récipient, tel que défini en fonction de sa forme et de son utilisation.

S'il est connu que le réglage, même fin, des paramètres de chauffe (notamment la température de chauffe) et de soufflage (telle que la pression de soufflage) a une influence déterminante sur la forme finale du récipient, on connaît toutefois mal les relations de cause à effet entre une modification de ces paramètres et la répartition de la matière dans le récipient.

En général, les réglages machine sont confiés à des opérateurs qualifiés qui, grâce à leur savoir-faire, déduisent des réglages à effectuer d'après des contrôles visuels et tactiles qu'ils effectuent au jugé sur des récipients prélevés à l'issue du soufflage. Le problème d'une telle approche est qu'elle est n'est pas automatisable, chaque opérateur ayant son propre tour de main. En outre, compte tenu des cadences élevées les contrôles ne peuvent être que ponctuels, et une dérive qualitative constatée lors d'un contrôle fait peser un doute quant à la qualité de l'ensemble des récipients écoulés depuis le contrôle précédent.

Certains constructeurs, tels Du Pont De Nemours dans son brevet américain US 4 042 657, ont une approche plus systématique, préconisant l'élimination des récipients dont la courbe de pression n'est pas conforme à une courbe standard. Il en résulte cependant un important taux de rebut, sans progrès notoire vers une meilleure maîtrise de la qualité des récipients produits.

Plus récemment, il a été proposé (cf. dans la demande internationale publiée WO2008/081107 et la demande de brevet américain US2010/176528 qui en est issue) d'effectuer une corrélation ponctuelle entre des points singuliers d'une courbe réelle de soufflage et les points correspondants d'une courbe de soufflage théorique, et de modifier des paramètres machine en fonction de divergences constatées aux points singuliers. Cette solution, en voie d'implémentation, vise à permettre une automatisation au moins partielle des réglages machine.

En pratique, l'implémentation est rendue délicate en raison de la multiplicité des paramètres et de leur corrélation. Ainsi, l'on constate qu'une modification apportée à l'un au moins des paramètres (pression, température), destinée à corriger la position d'un point donné sur la courbe de pression, a des répercussions non contrôlées sur l'ensemble de la courbe. Le document FR 2 909 304 A1 décrit un procédé selon les caractéristiques du préambule de la revendication 1.

L'invention vise à perfectionner les procédés existants de fabrication des récipients, et plus précisément à faciliter une véritable automatisation de la production.

A cet effet, l'invention propose, en premier lieu, un procédé de fabrication d'un récipient par étirage soufflage dans un moule à partir d'une ébauche en matière plastique, qui comprend les opérations consistant à :
- chauffer l'ébauche à une température de chauffe prédéterminée ;
- introduire l'ébauche dans le moule ;
- étirer l'ébauche au moyen d'une tige déplacée à une vitesse d'étirage prédéterminée ;
- à un instant prédéterminé, dénommé top présoufflage, commander l'ouverture d'une électrovanne pour mettre en communication l'intérieur de l'ébauche avec une source de gaz à une pression de présoufflage et un débit de présoufflage prédéterminés ;
- mesurer la pression régnant à l'intérieur de l'ébauche ;
- détecter un instant, correspondant à un minimum local de pression dans l'ébauche ;
- mémoriser l'instant auquel se produit ce minimum de pression ainsi que la pression correspondante régnant dans l'ébauche ;
- comparer l'instant et la pression du minimum détecté avec, respectivement, un instant et une pression prédéterminés d'un minimum théorique de pression ;
- si le minimum mesuré et le minimum théorique ne sont pas confondus, commander une modification d'au moins l'un des paramètres suivants : pression de présoufflage, débit de présoufflage, vitesse d'étirage, température de chauffe.

De très nombreux essais ont été nécessaires avant que puisse être formulée l'hypothèse selon laquelle la position d'un minimum local sur la courbe de pression pouvait avoir une influence déterminante sur la qualité finale des récipients, tant la conviction était grande qu'il fallait au contraire se concentrer sur les pics de pression. De fait, les tests ont démontré que les corrections apportées aux paramètres machine en fonction de la position d'un minimum local de pression lors du présoufflage permettent d'améliorer de manière significative la qualité des récipients.

Plus précisément, le procédé comprend :
- si l'instant et la pression du minimum détecté sont, respectivement, antérieur et inférieure à l'instant et à la pression du minimum théorique, une opération consistant à diminuer la température de chauffe ou la vitesse d'étirage ;
- si l'instant et la pression du minimum détecté sont, respectivement, antérieur et égale à l'instant et à la pression du minimum théorique, une opération consistant à diminuer la pression ou le débit de présoufflage, et éventuellement une opération supplémentaire consistant à diminuer la température de chauffe ou la vitesse d'étirage ;
- si l'instant et la pression du minimum détecté sont, respectivement, antérieur et supérieure à l'instant et à la pression du minimum théorique, une opération consistant à diminuer la pression ou le débit de présoufflage ;
- si l'instant et la pression du minimum détecté sont, respectivement, égal et supérieure à l'instant et à la pression du minimum théorique, une opération consistant à diminuer la pression ou le débit de présoufflage, et éventuellement une opération supplémentaire consistant à augmenter la température de chauffe ou la vitesse d'étirage ;
- si l'instant et la pression du minimum détecté sont, respectivement, postérieur et supérieure à l'instant et à la pression du minimum théorique, une opération consistant à augmenter la température de chauffe ou la vitesse d'étirage.
- si l'instant et la pression du minimum détecté sont, respectivement, postérieur et égale à l'instant et à la pression du minimum théorique, une opération consistant à augmenter la pression ou le débit de présoufflage, et éventuellement une opération supplémentaire consistant à augmenter la température de chauffe ou la vitesse d'étirage.
- si l'instant et la pression du minimum détecté sont, respectivement, postérieur et inférieure à l'instant et à la pression du minimum théorique, une opération consistant à augmenter la pression ou le débit de présoufflage.
- si l'instant et la pression du minimum détecté sont, respectivement, égal et inférieure à l'instant et à la pression du minimum théorique, une opération consistant à augmenter la pression ou le débit de présoufflage, et éventuellement une opération supplémentaire consistant à diminuer la température de chauffe ou la vitesse d'étirage.

L'invention propose, en deuxième lieu, un produit programme d'ordinateur destiné à être implémenté sur une unité de contrôle d'une machine de fabrication de récipients à partir d'ébauches en matière plastique, qui comprend des instructions pour la mise en oeuvre des opérations du procédé décrit ci-dessus.

D'autres objets et avantages de l'invention apparaîtront à la lumière de la description faite ci-après en référence aux dessins annexés dans lesquels :
- la figure 1 est une vue schématique illustrant une machine de fabrication de récipients, et montrant plus précisément, en coupe, un moule dans lequel est soufflé un récipient (en trait continu) à partir d'une préforme (en trait interrompu) ;
- la figure 2 est un diagramme sur lequel est tracée une courbe illustrant les variations de la pression régnant dans la préforme lors de son présoufflage ;
- les figures 3 à 10 sont des diagrammes simplifiés sur chacune desquelles est tracée en trait plein une section de courbe de pression réelle centrée sur un minimum local, et en trait interrompu la section correspondante sur une courbe de pression théorique, chaque figure illustrant un cas particulier de décalage entre les minima, respectivement sur la courbe réelle et la courbe théorique.

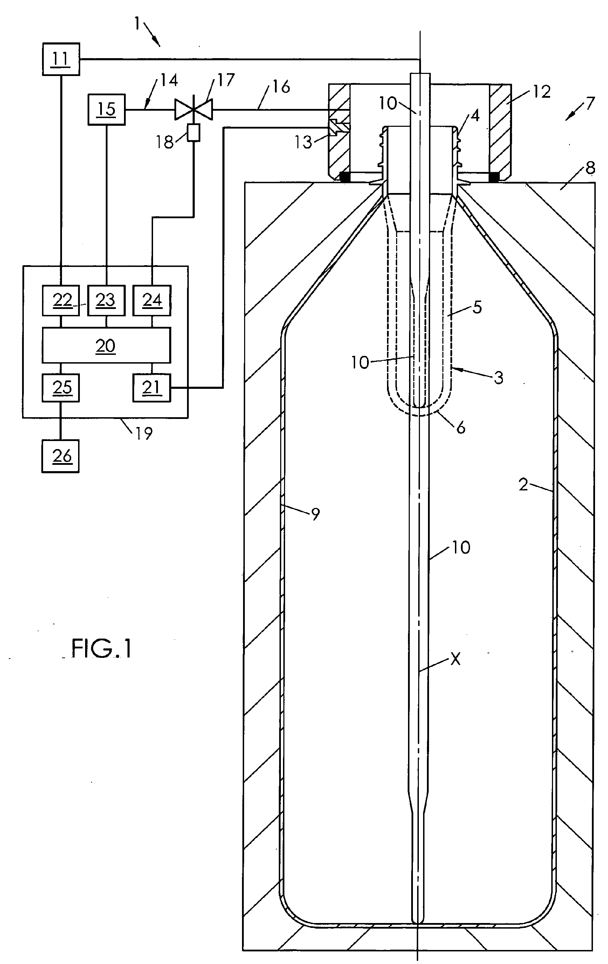

Sur la figure 1 est partiellement représentée une machine **1** pour la fabrication de récipients **2** à partir d'ébauches **3** en matière plastique tel que PET (polyéthylène téréphtalate). Suivant un mode préféré de réalisation, les ébauches **3** sont des préformes à partir desquelles les récipients **2** finaux sont directement obtenus, sans passage par un récipient intermédiaire. Chaque préforme **3** comprend un col **4** (qui ne subit pas de déformation au cours de la formation du récipient **2),** et un corps 5 cylindrique terminé par un fond **6** hémisphérique.

La machine **1** est équipée d'une pluralité d'unités **7** de moulage montées à la périphérie d'un carrousel et comprenant chacune un moule **8** composé de deux demi-moules qui définissent ensemble une cavité **9** interne à l'empreinte du récipient **2.**

Chaque moule **8** est destiné à recevoir une préforme **3** en provenance d'un four situé en amont des unités **7** de moulage et où chaque préforme **3** est portée, au moyen par exemple de lampes émettant un rayonnement dans l'infrarouge, à une température **T** supérieure à la température de transition vitreuse (environ 80°C pour le PET) avant d'être transférée à une unité **7** de moulage.

Chaque unité **7** de moulage comprend en outre :
- une tige **10** d'étirage montée coulissante par rapport au moule **8** le long d'un axe **X** principal (généralement de révolution),
- un dispositif **11** de commande du déplacement axial de la tige **10,** de préférence du type électromagnétique (on note **V_{E}** la vitesse de déplacement de la tige **16,** cette vitesse **V_{E}** étant également dénommée vitesse d'étirage),
- une tuyère **12** qui vient coiffer une face supérieure du moule **8,** en venant recouvrir le col **4** qui en dépasse,
- un capteur **13** de pression monté sur la tuyère **12** pour y effectuer une mesure de la pression régnant dans la préforme **3,** au moins au cours de l'opération de présoufflage.

La machine comprend par ailleurs :
- un circuit **14** de présoufflage comprenant une source **15** de fluide (en l'espèce de l'air) de présoufflage à moyenne pression (comprise entre 5 et 16 bars) et un conduit **16** (qui peut être formé au moins partiellement dans une paroi latérale de la tuyère **11)** reliant la source **15** à chaque tuyère **12** avec interposition d'une électrovanne **17** de présoufflage sur laquelle est monté un régulateur **18** du débit **D_{P}** de présoufflage,
- une unité **19** de contrôle électronique (ou informatique), reliée électriquement au dispositif **11** de commande du déplacement de la tige **11,** au capteur **13** de pression, à la source **15** de pression de présoufflage et à l'électrovanne **17** via son régulateur **18** de débit. Plus précisément, l'unité **19** de contrôle comprend :
   - un processeur **20,**
   - une mémoire **21** tampon reliée au processeur **20** et dans laquelle sont inscrites les mesures de pression effectuées par le capteur **13,**
   - quatre pilotes **22, 23, 24, 25,** qui peuvent se présenter sous forme de modules logiciels commandés par (ou programmés sur) le processeur **20,** et contrôlant respectivement le dispositif **11** de commande de déplacement axial de la tige **10,** la source **15** pour moduler la pression de présoufflage fournie à la tuyère **12,** l'électrovanne **17** via son régulateur **18,** de manière à moduler le débit **D_{P}** d'air fourni à la tuyère **12,** et un dispositif **26** de régulation de la puissance des lampes du four, de manière à régler *in fine* la température **T** de chauffe des préformes.

Pour la réalisation concrète de la tuyère **12** et l'intégration de l'électrovanne **17,** on pourra se référer à la demande FR 2 872 082 (Sidel) ou à son équivalent international WO 2006/008380.

On décrit ci-après le formage d'un récipient **2** à partir d'une préforme **3** préalablement chauffée.

La préforme **3** chaude, à une température supérieure à la température de transition vitreuse de la matière (dans le cas du PET, la préforme est chauffée à une température généralement comprise entre 120°C et 140°C), est introduite col **4** en haut dans un moule **8** préalablement ouvert, la tige **10** d'étirage étant dans une position escamotée pour permettre l'introduction de la préforme **3.**

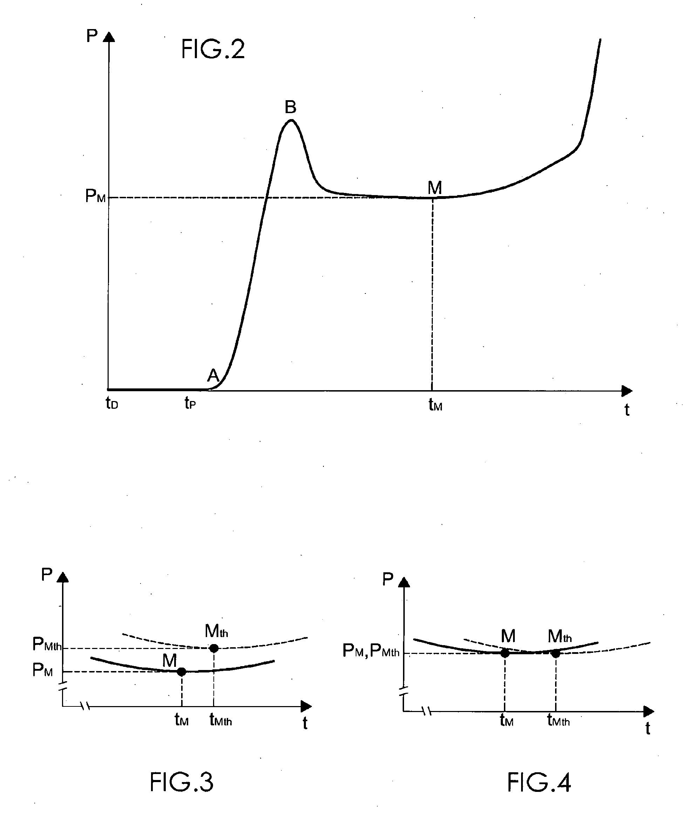

Au fur et à mesure de la rotation du carrousel sur lequel est montée l'unité 7 de moulage, le moule **8** se referme sur la préforme **3** à un instant dénommé top départ **t_{D},** qui constitue l'origine de l'axe des temps (abscisses) sur le diagramme de la figure 2. A partir de cet instant, l'unité **19** de contrôle mesure en continu la pression **P** régnant dans la préforme, les valeurs mesurées étant inscrites dans la mémoire **21.**

Le terme « en continu » signifie que la période à laquelle sont effectuées les mesures de pression est faible devant les temps nécessaires aux variations de pression dans la préforme **3.**

A cet effet, on aura avantage à choisir un capteur **13** à hautes performances, permettant de réaliser des mesures de pression à une période inférieure ou égale à 5 ms (milliseconde), de préférence inférieure ou égale à 2 ms, l'idéal étant de pouvoir effectuer les mesures à une période de 1 ms.

À un instant prédéterminé, dénommé top présoufflage **t_{P},** l'unité **19** de contrôle commande l'ouverture de l'électrovanne **17** de présoufflage pour mettre en communication l'intérieur de la préforme **3** avec la source **15** d'air de présoufflage.

En pratique, l'instant réel à partir duquel la pression **P** dans la préforme **3** commence à croître accuse un retard par rapport au top présoufflage **t_{P},** ce retard correspondant au temps de réponse de l'électrovanne **17.**

L'étirage débute dès lors que la tige **10** atteint une position médiane (représentée en trait interrompu sur la figure 1) dans laquelle la tige **10** entre en contact avec le fond **6** de la préforme **3.**

On note **A** le point de la courbe à partir duquel la pression commence à croître, qui correspond à l'instant réel du début du présoufflage.

La pression dans la préforme **3** croît à partir du point **A** à mesure qu'elle est étirée de manière élastique, le débit d'air introduit dans la préforme **3** étant supérieur à l'accroissement du volume interne de la préforme 3, jusqu'à atteindre un pic local en un point noté **B,** à un instant noté **t_{B}.** Le pic local **B** est attribué à un seuil d'écoulement plastique de la préforme **3.**

Au point **B** la pente de la courbe de soufflage est nulle, cette pente s'inversant de gauche (où elle est positive) à droite (où elle est négative) du point **B.** La pression correspondante est notée **P_{B}.**

Passé le pic local au point **B,** la pression **P** subit une diminution attribuée à l'expansion radiale de la préforme **3** qui, son seuil d'écoulement plastique dépassé, subit à partir de l'instant **t_{B}** une déformation plastique.

On voit sur la figure 2 qu'à partir du point **B** la pression subit une première phase de décroissance rapide, la pente de la courbe de pression étant forte, suivie d'une deuxième phase de décroissance lente, la pente de la courbe étant faible.

La pression **P** atteint alors un minimum local en un point noté **M,** à partir duquel la pression croît à nouveau, d'abord lentement, puis plus rapidement. On note **t_{M}** l'instant auquel la pression atteint ce minimum local, et **P_{M}** la pression régnant dans la préforme **3** à cet instant.

Passée une temporisation, pendant laquelle on maintient ouverte l'électrovanne **17** de présoufflage, on lance le soufflage en commandant simultanément la fermeture de l'électrovanne **17** de présoufflage et l'ouverture d'une électrovanne de soufflage reliée d'une part à la tuyère et à une source d'air à une pression de soufflage supérieure à la pression de présoufflage, ce qui provoque une brusque augmentation de la pression dans la préforme **3.** Cette augmentation est illustrée par la soudaine inflexion de la courbe de pression à l'extrême droite de la figure 2.

On ne s'intéresse pas à l'opération de soufflage, ce qui explique que la courbe figure 2 soit interrompue au début de celle-ci.

L'hypothèse d'une influence du présoufflage sur la qualité du récipient final a déjà été formulée. De nombreux essais ont été conduits avant qu'il soit possible d'identifier, pour une préforme et un récipient final donnés, une courbe de pression permettant d'obtenir le récipient présentant des caractéristiques (et notamment une répartition de la matière) aussi proches de possible d'un cahier des charges préétabli.

Cette courbe de pression est mémorisée dans l'unité **19** de contrôle. Compte tenu des différences qui ne manquent pas d'exister entre les préformes, et des variations aléatoires des paramètres machine (pression, débit, etc.), qui peuvent avoir des causes exogènes (telles qu'une variation d'hygrométrie ou de la température ambiante), une concordance parfaite entre les courbes réelles de pression mesurée dans les préformes **3** en cours de soufflage et la courbe de pression théorique ne saurait être garantie.

En revanche, il est envisageable de tenter un rapprochement ponctuel, à condition d'identifier au moins un point singulier dont l'influence sur les caractéristiques du récipient est significative.

Cette démonstration n'a pas été sans mal, car toute modification d'un paramètre machine, parmi lesquels la température T de chauffe des préformes **3,** la pression **P_{P}** de présoufflage, le débit **D_{P}** de présoufflage et la vitesse **V_{E}** d'étirage, modifie l'ensemble de la courbe de pression. Pour isoler l'influence d'un point sélectionné, l'on doit donc conduire des essais en faisant en sorte que d'autres points supposés significatifs restent sensiblement fixes sur la courbe cependant que l'on parvient à modifier la position du point sélectionné en agissant sur l'un au moins des paramètres machine.

C'est ainsi qu'on a pu démontrer que l'influence du point **M** sur les caractéristiques du récipient final est significative. Plus précisément, on a pu démontrer que l'on pouvait améliorer significativement la qualité des récipients produits en veillant à ce que le point **M** soit sensiblement confondu avec le minimum local **Mₜₕ** correspondant sur une courbe de pression théorique prédéfinie, et ce indépendamment du positionnement d'autres points présumés singuliers (notamment le point **B).**

Ainsi, par hypothèse, on dispose de la courbe théorique de pression (qui peut être limitée au présoufflage, comme est illustrée sur la figure 2) pour laquelle les caractéristiques du récipient obtenu apparaissent conformes au cahier des charges préétabli.

On identifie ensuite sur la courbe théorique le point **Mₜₕ,** défini par ses coordonnées (**t_{Mth}**, **P_{Mth}**), correspondant à un minimum local de pression au cours du présoufflage. Les coordonnées (**t_{Mth}**, **P_{Mth}**) du point **Mₜₕ** sont mémorisées dans l'unité **19** de contrôle.

En cours de production, on identifie le point **M** réel en détectant le minimum local de pression auquel ce point correspond. Les coordonnées (**t_{M}**, **P_{M}**) du point **M** son mémorisées à chaque cycle par l'unité **19** de contrôle, qui effectue leur comparaison systématique avec les coordonnées (**t_{Mth}**, **P_{Mth}**) du point **Mₜₕ** théorique.

En pratique, l'unité de contrôle vérifie si le point **M** réel se trouve dans une zone de tolérance définie autour du point **Mₜₕ** théorique. En pratique, l'unité de contrôle compare, d'une part, l'instant **t_{M}** réel avec l'instant théorique **t_{Mth}** et, d'autre part, la pression **P_{M}** réelle avec la pression théorique **P_{Mth}** pour vérifier tous deux se trouvent dans une tolérance, respectivement de temps et de pression, définie pour le point **M.**

Lorsque le point **M** réel se trouve dans cette zone de tolérance, les points **M** et **Mₜₕ** sont décrétés confondus, et les paramètres machine sont conservés pour le cycle suivant.

Lorsqu'en revanche le point **M** réel se trouve hors de la zone de tolérance, les points **M** et **Mₜₕ** sont décrétés distincts, l'unité **19** de contrôle rétroagit sur l'un au moins des paramètres machine afin de faire converger, au cycle suivant, le point **M** réel vers le point **Mₜₕ** théorique.

Nous avons vu que les paramètres comprennent la pression **P_{P}** de présoufflage, le débit de présoufflage **D_{P},** vitesse **V_{E}** d'étirage et la température **T** de chauffe des préformes **3.**

Plusieurs cas peuvent se présenter, selon que l'instant réel **t_{M}** est antérieur, confondu (c'est-à-dire dans la zone de tolérance) ou postérieur à l'instant théorique **t_{Mth}** et selon que la pression **P_{M},** réelle est inférieure, égale (c'est-à-dire dans la zone de tolérance) ou supérieure à la pression **P_{Mth}** théorique.

Il a été constaté que l'influence de la pression **P_{P}** est similaire à celle du débit **D_{P}.** L'influence commune de ces deux paramètres peut donc être ramenée à l'influence de leur produit **P_{P}×D_{P}** : l'augmentation de ce produit peut résulter d'une augmentation de la pression de présoufflage **P_{P}** à débit **D_{P}** constant, d'une augmentation du débit **D_{P}** de présoufflage à pression **P_{P}** constante, ou d'une augmentation simultanée des deux **D_{P}** et **P_{P}** ; au contraire, une diminution du produit **P_{P}×D_{P}** peut résulter d'une diminution de la pression **P_{P}** de présoufflage à débit **D_{P}** constant, une diminution du débit **D_{P}** de présoufflage à pression **P_{P}** constante, ou une diminution simultanée de la pression **D_{P}** et du débit **D_{P},** étant entendu qu'augmenter l'un tout en diminuant l'autre n'apparaît pas utile.

Par ailleurs, on a constaté que les paramètres machine influaient sur la position du point **M** de la manière suivante :
- une augmentation de la pression **P_{P}** ou du débit **D_{P}** de présoufflage (qui peut être exprimée par une augmentation du produit **P_{P}×D_{P})** entraîne un décalage du point **M** à la fois vers la gauche et vers le haut, c'est-à-dire une diminution de son instant **t_{M}** et une augmentation de sa pression **P_{M}**,
- une diminution de la pression **P_{P}** ou du débit **D_{P}** de présoufflage (qui peut être exprimée par une diminution du produit **P_{P}×D_{P})** entraîne un décalage du point **M** à la fois vers la droite et vers le bas, c'est-à-dire une augmentation de son instant **t_{M}** et une diminution de sa pression **P_{M},**
- une augmentation de la température **T** de chauffe ou de la vitesse d'étirage **V_{E}** entraîne un décalage du point **M** à la fois vers la gauche et vers le bas, c'est-à-dire une diminution de son instant **t_{M}** et une diminution de sa pression **P_{M},**
- une diminution de la température **T** de chauffe ou de la vitesse d'étirage **V_{E}** entraîne un décalage du point **M** à la fois vers la droite et vers le haut, c'est-à-dire une augmentation de son instant **t_{M}** et une augmentation de sa pression **P_{M}.**

On a représenté sur les figures 3 à 10 les différents cas de figure qui peuvent se présenter, à l'exception d'une identité du point **M** réel et du point **Mₜₕ** théorique.

On a tout d'abord représenté sur la figure 3 le cas où le point **M** réel est situé à la fois à la gauche et au-dessous du point **Mₜₕ** théorique, c'est-à-dire que **t_{M}** < **t_{Mth}** et **P_{M}** < **P_{Mth}.**

Dans ce cas, afin de faire converger le point **M** réel vers le point **Mₜₕ** théorique, l'unité de contrôle commande par rétroaction une diminution de la vitesse **V_{E}** d'étirage ou de la température T de chauffe.

On a ensuite représenté sur la figure 4 le cas où le point **M** réel est situé à gauche du point **Mₜₕ** théorique, c'est-à-dire que **t_{M}** < **t_{Mth}** et **P_{M}** = **P_{Mth}.**

Dans ce cas, afin de faire converger le point **M** réel vers le point **Mₜₕ** théorique, l'unité de contrôle commande par rétroaction une diminution de la pression **P_{P}** ou du débit **D_{P}** de présoufflage (ou du produit **P_{P}×D_{P},** doublée (ou suivie) d'une diminution de la vitesse **V_{E}** d'étirage ou de la température **T** de chauffe.

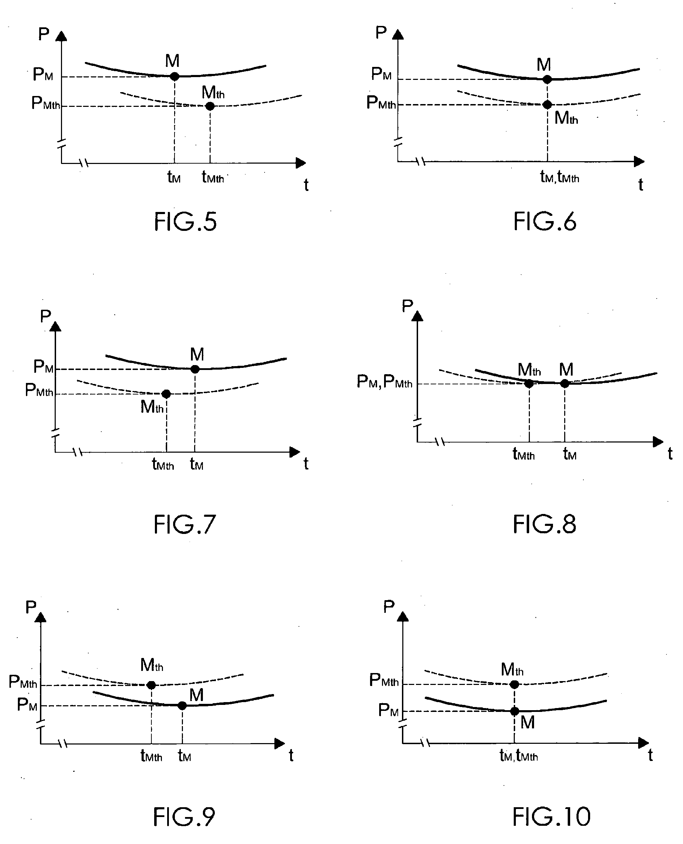

On a représenté sur la figure 5 le cas où le point **M** réel est situé à gauche et au-dessus du point **Mₜₕ** théorique, c'est-à-dire que **t_{M}** < **t_{Mth}** et **P_{M}** > **P_{Mth}.**

Dans ce cas, afin de faire converger le point **M** réel vers le point **Mₜₕ** théorique, l'unité de contrôle commande par rétroaction une diminution de la pression **P_{P}** ou du débit **D_{P}** de présoufflage (ou du produit **P_{P}×D_{P}.**

On a ensuite représenté sur la figure 6 le cas où le point M réel est situé au-dessus du point **Mₜₕ** théorique, c'est-à-dire que **t_{M}** = **t_{Mth}** et **P_{M}** > **P_{Mth}.**

Dans ce cas, afin de faire converger le point **M** réel vers le point **Mₜₕ** théorique, l'unité de contrôle commande par rétroaction une diminution de la pression **P_{P}** ou du débit **D_{P}** de présoufflage (ou du produit **P_{P}×D_{P},** doublée (ou suivie) d'une augmentation de la vitesse **V_{E}** d'étirage ou de la température **T** de chauffe.

On a représenté sur la figure 7 le cas où le point **M** réel est situé à droite et au-dessus du point **Mₜₕ** théorique, c'est-à-dire que **t_{M}** > **t_{Mth}** et **P_{M}** > **P_{Mth}.**

Dans ce cas, afin de faire converger le point **M** réel vers le point **Mₜₕ** théorique, l'unité de contrôle commande par rétroaction une augmentation de la vitesse **V_{E}** d'étirage ou de la température **T** de chauffe.

On a ensuite représenté sur la figure 8 le cas où le point **M** réel est situé à droite du point **Mₜₕ** théorique, c'est-à-dire que **t_{M}** > **t_{Mth}** et **P_{M}** = **P_{Mth}.**

Dans ce cas, afin de faire converger le point **M** réel vers le point **Mₜₕ** théorique, l'unité de contrôle commande par rétroaction une augmentation de la pression **P_{P}** ou du débit **D_{P}** de présoufflage (ou du produit **P_{P}×D_{P},** doublée (ou suivie) d'une augmentation de la vitesse **V_{E}** d'étirage ou de la température **T** de chauffe.

On a représenté sur la figure 9 le cas où le point **M** réel est situé à droite et au-dessous du point **Mₜₕ** théorique, c'est-à-dire que **t_{M}** > **t_{Mth}** et **P_{M} < P_{Mth}.**

Dans ce cas, afin de faire converger le point **M** réel vers le point **Mₜₕ** théorique, l'unité de contrôle commande par rétroaction une augmentation de la pression **P_{P}** ou du débit **D_{P}** de présoufflage (ou du produit **P_{P}×D_{P}.**

On a enfin représenté sur la figure 10 le cas où le point **M** réel est situé au-dessous du point **Mₜₕ** théorique, c'est-à-dire que **t_{M}** = **t_{Mth}** et **P_{M}** < **P_{Mth}.**

Dans ce cas, afin de faire converger le point **M** réel vers le point **Mₜₕ** théorique, l'unité de contrôle commande par rétroaction une augmentation de la pression **P_{P}** ou du débit **D_{P}** de présoufflage (ou du produit **P_{P}×D_{P},** doublée (ou suivie) d'une diminution de la vitesse **V_{E}** d'étirage ou de la température **T** de chauffe.

Un exemple numérique est fourni dans le tableau ci-après, pour illustrer les valeurs de l'instant et de la pression du minimum local **M.** Les mesures présentées correspondent à la courbe de pression de la figure 2.

| **Paramètre** | **Valeur** |
|---|---|
| Type de récipient | Bouteille 1,5 I |
| Matière | PET |
| **T** | 120-140°C |
| **P_{P}** | 5 bars |
| **D_{P}** | 40 l/s |
| **V_{E}** | 2000 mm/s |
| **t_{P}** | 80 ms |
| Tolérance sur **t_{M}** | ± 10 ms s |
| Tolérance sur **P_{M}** | ± 200 mbar |

| **Mesure** | **Valeur** |
|---|---|
| **t_{M}** | 170 ms |
| **P_{M}** | 3,2 bars |

En pratique, les opérations de mémorisation de la courbe de pression, d'identification du minimum local **M,** de comparaison des coordonnées de celui-ci avec celles du minimum local théorique **Mₜₕ,** ainsi que les rétroactions qui viennent d'être évoquées sur les paramètres **P_{P}, D_{P}, T** et **V_{E}** en fonction du résultat de cette comparaison, sont pilotées par l'unité **19** de contrôle. Plus précisément, ces opérations résultent de l'exécution d'instructions d'un produit programme d'ordinateur implémenté à cet effet dans son processeur **20.**

## Revendications

1. Procédé de fabrication d'un récipient **(2)** par étirage soufflage dans un moule **(8)** à partir d'une ébauche **(3)** en matière plastique, qui comprend les opérations consistant à :
- chauffer l'ébauche **(3)** à une température de chauffe **(T)** prédéterminée ;
- introduire l'ébauche **(3)** dans le moule (**8**) ;
- étirer l'ébauche **(3)** au moyen d'une tige **(10)** déplacée à une vitesse d'étirage (**V_{E}**) prédéterminée ;
- à un instant prédéterminé, dénommé top présoufflage (**t_{P}**), commander l'ouverture d'une électrovanne **(17)** pour mettre en communication l'intérieur de l'ébauche **(3)** avec une source **(15)** de gaz à une pression de présoufflage (**P_{P}**) et un débit (**D_{P}**) de présoufflage prédéterminés ;
- mesurer la pression **(P)** régnant à l'intérieur de l'ébauche (**3**) ;
- le procédé étant **caractérisé en ce qu'**il comprend les opérations consistant à
- détecter un instant (**t_{M}**), correspondant à un minimum local de pression **(P)** dans l'ébauche **(3) ;**
- mémoriser l'instant (**t_{M}**) auquel se produit ce minimum de pression ainsi que la pression (**P_{M}**) correspondante régnant dans l'ébauche **(3) ;**
- comparer l'instant (**t_{M}**) et la pression (**P_{M}**) du minimum détecté avec, respectivement, un instant (**t_{Mth}**) et une pression (**P_{Mth}**) prédéterminés d'un minimum théorique de pression ;
- si le minimum mesuré et le minimum théorique ne sont pas confondus, commander une modification d'au moins l'un des paramètres suivants : pression de présoufflage **(P_{P}),** débit de présoufflage **(D_{P}),** vitesse **(V_{E})** d'étirage, température **(T)** de chauffe.

2. Procédé selon la revendication 1, qui comprend, si l'instant **(t_{M})** et la pression **(P_{M})** du minimum détecté sont, respectivement, antérieur et inférieure à l'instant et à la pression du minimum théorique, une opération consistant à diminuer la température de chauffe **(T)** ou la vitesse **(V_{E})** d'étirage.

3. Procédé selon la revendication 1, qui comprend, si l'instant (**t_{M}**) et la pression (**P_{M}**) du minimum détecté sont, respectivement, antérieur et égale à l'instant et à la pression du minimum théorique, une opération consistant à diminuer la pression **(P_{P})** ou le débit **(D_{P})** de présoufflage.

4. Procédé selon la revendication 3, qui comprend une opération supplémentaire consistant à diminuer la température de chauffe **(T)** ou la vitesse **(V_{E})** d'étirage.

5. Procédé selon la revendication 1, qui comprend, si l'instant (**t_{M}**) et la pression **(P_{M})** du minimum détecté sont, respectivement, antérieur et supérieure à l'instant et à la pression du minimum théorique, une opération consistant à diminuer la pression **(P_{P})** ou le débit **(D_{P})** de présoufflage.

6. Procédé selon la revendication 1, qui comprend, si l'instant (**t_{M}**) et la pression **(P_{M})** du minimum détecté sont, respectivement, égal et supérieure à l'instant et à la pression du minimum théorique, une opération consistant à diminuer la pression **(P_{P})** ou le débit **(D_{P})** de présoufflage

7. Procédé selon la revendication 6, qui comprend une opération supplémentaire consistant à augmenter la température de chauffe **(T)** ou la vitesse (**V_{E}**) d'étirage.

8. Procédé selon la revendication 1, qui comprend, si l'instant (**t_{M}**) et la pression (**P_{M}**) du minimum détecté sont, respectivement, postérieur et supérieure à l'instant et à la pression du minimum théorique, une opération consistant à augmenter la température de chauffe **(T)** ou la vitesse (**V_{E}**) d'étirage.

9. Procédé selon la revendication 1, qui comprend, si l'instant (**t_{M}**) et la pression (**P_{M}**) du minimum détecté sont, respectivement, postérieur et égale à l'instant et à la pression du minimum théorique, une opération consistant à augmenter la pression **(P_{P})** ou le débit **(D_{P})** de présoufflage.

10. Procédé selon la revendication 9, qui comprend une opération supplémentaire consistant à augmenter la température de chauffe **(T)** ou la vitesse **(V_{E})** d'étirage.

11. Procédé selon la revendication 1, qui comprend, si l'instant (**t_{M}**) et la pression (**P_{M}**) du minimum détecté sont, respectivement, postérieur et inférieure à l'instant et à la pression du minimum théorique, une opération consistant à augmenter la pression **(P_{P})** ou le débit **(D_{P})** de présoufflage.

12. Procédé selon la revendication 1, qui comprend, si l'instant (**t_{M}**) et la pression (**P_{M}**) du minimum détecté sont, respectivement, égal et inférieure à l'instant et à la pression du minimum théorique, une opération consistant à augmenter la pression **(P_{P})** ou le débit **(D_{P})** de présoufflage.

13. Procédé selon la revendication 12, qui comprend une opération supplémentaire consistant à diminuer la température de chauffe **(T)** ou la vitesse **(V_{E})** d'étirage.

14. Programme d'ordinateur destiné à être implémenté sur une unité de contrôle d'une machine (1) de fabrication de récipients à partir d'ébauches en matière plastique, qui comprend des instructions pour la mise en oeuvre des opérations du procédé selon l'une de revendications 1 à 13.

## Patentansprüche

1. Verfahren zum Herstellen eines Behälters (2) durch Streckblasen in einer Form (8) ausgehend von einem Rohling (3) aus Kunststoff, das die Schritte umfasst, die darin bestehen:
- den Rohling (3) auf eine vorgegebene Heiztemperatur (T) zu erhitzen;
- den Rohling (3) in die Form (8) einzubringen;
- den Rohling (3) mittels eines Stifts (10), der mit einer vorgegebenen Streckgeschwindigkeit (V_{E}) verlagert wird, zu strecken;
- zu einem vorgegebenen Zeitpunkt, der oberer Vorblaspunkt (t_{P}) genannt wird, das Öffnen eines Elektroventils (17) zu steuern, um zwischen dem Innenraum des Rohlings (3) und einer Gasquelle (15) mit vorgegebenem Vorblasdruck (P_{P}) und vorgegebenem Vorblasdurchfluss (D_{P}) eine Kommunikation herzustellen; und
- den Druck (P), der in dem Rohling (3) herrscht, zu messen;
- wobei das Verfahren **dadurch gekennzeichnet ist, dass** es die folgenden Schritte umfasst, die darin bestehen:
- einen Zeitpunkt (t_{M}) zu detektieren, der einem lokalen Minimum des Drucks (P) in dem Rohling (3) entspricht;
- den Zeitpunkt (t_{M}), zu dem dieses Druckminimum entsteht, sowie den entsprechenden Druck (P_{M}), der in dem Rohling (3) herrscht, zu speichern;
- den Zeitpunkt (t_{M}) und den Druck (P_{M}) des detektierten Minimums mit einem vorgegebenen Zeitpunkt (t_{Mth}) bzw. einem vorgegebenen Druck (P_{Mth}) eines theoretischen Druckminimums zu vergleichen; und
- dann, wenn das gemessene Minimum und das theoretische Minimum nicht zusammenfallen, eine Veränderung wenigstens eines der folgenden Parameter zu steuern: Vorblasdruck (P_{P}), Vorblasdurchfluss (D_{P}), Streckgeschwindigkeit (V_{E}) und Heiztemperatur (T).

2. Verfahren nach Anspruch 1, das dann, wenn der Zeitpunkt (t_{M}) und der Druck (P_{M}) des detektierten Minimums früher als der Zeitpunkt bzw. niedriger als der Druck des theoretischen Minimums sind, einen Schritt umfasst, der darin besteht, die Heiztemperatur (T) oder die Streckgeschwindigkeit (V_{E}) zu verringern.

3. Verfahren nach Anspruch 1, das dann, wenn der Zeitpunkt (t_{M}) und der Druck (P_{M}) des detektierten Minimums früher als der Zeitpunkt bzw. gleich dem Druck des theoretischen Minimums sind, einen Schritt umfasst, der darin besteht, den Vorblasdruck (P_{P}) oder den Vorblasdurchfluss (D_{P}) zu verringern.

4. Verfahren nach Anspruch 3, das einen zusätzlichen Schritt umfasst, der darin besteht, die Heiztemperatur (T) oder die Streckgeschwindigkeit (V_{E}) zu verringern.

5. Verfahren nach Anspruch 1, das dann, wenn der Zeitpunkt (t_{M}) und der Druck (P_{M}) des detektierten Minimums früher als der Zeitpunkt bzw. höher als der Druck des theoretischen Minimums sind, einen Schritt umfasst, der darin besteht, den Vorblasdruck (P_{P}) oder den Vorblasdurchfluss (D_{P}) zu verringern.

6. Verfahren nach Anspruch 1, das dann, wenn der Zeitpunkt (t_{M}) und der Druck (P_{M}) des detektierten Minimums gleich dem Zeitpunkt bzw. höher als der Druck des theoretischen Minimums sind, einen Schritt umfasst, der darin besteht, den Vorblasdruck (P_{P}) oder den Vorblasdurchfluss (D_{P}) zu verringern.

7. Verfahren nach Anspruch 6, das einen zusätzlichen Schritt umfasst, der darin besteht, die Heiztemperatur (T) oder die Streckgeschwindigkeit (V_{E}) zu erhöhen.

8. Verfahren nach Anspruch 1, das dann, wenn der Zeitpunkt (t_{M}) und der Druck (P_{M}) des detektierten Minimums später als der Zeitpunkt bzw. höher als der Druck des theoretischen Minimums sind, einen Schritt umfasst, der darin besteht, die Heiztemperatur (T) oder die Streckgeschwindigkeit (V_{E}) zu erhöhen.

9. Verfahren nach Anspruch 1, das dann, wenn der Zeitpunkt (t_{M}) und der Druck (P_{M}) des detektierten Minimums später als der Zeitpunkt bzw. gleich dem Druck des theoretischen Minimums sind, einen Schritt umfasst, der darin besteht, den Vorblasdruck (P_{P}) oder den Vorblasdurchfluss (D_{P}) zu erhöhen.

10. Verfahren nach Anspruch 9, das einen zusätzlichen Schritt umfasst, der darin besteht, die Heiztemperatur (T) oder die Streckgeschwindigkeit (V_{E}) zu erhöhen.

11. Verfahren nach Anspruch 1, das dann, wenn der Zeitpunkt (t_{M}) und der Druck (P_{M}) des detektierten Minimums später als der Zeitpunkt bzw. niedriger als der Druck des theoretischen Minimums sind, einen Schritt umfasst, der darin besteht, den Vorblasdruck (P_{P}) oder den Vorblasdurchfluss (D_{P}) zu erhöhen.

12. Verfahren nach Anspruch 1, das dann, wenn der Zeitpunkt (t_{M}) und der Druck (P_{M}) des detektierten Minimums gleich dem Zeitpunkt bzw. niedriger als der Druck des theoretischen Minimums sind, einen Schritt umfasst, der darin besteht, den Vorblasdruck (P_{P}) oder den Vorblasdurchfluss (D_{P}) zu erhöhen.

13. Verfahren nach Anspruch 12, das einen zusätzlichen Schritt umfasst, der darin besteht, die Heiztemperatur (T) oder die Streckgeschwindigkeit (V_{E}) zu erniedrigen.

14. Computerprogramm, das dazu bestimmt ist, in einer Steuereinheit einer Maschine (1) zur Herstellung von Behältern ausgehend von Kunststoffrohlingen implementiert zu werden, das Befehle zum Ausführen der Schritte des Verfahrens nach einem der Ansprüche 1 bis 13 umfasst.

## Claims

1. Method for manufacturing a container (2) by drawing-blowmoulding in a mould (8) from a preform (3) made of plastic material, which comprises the operations consisting in:
- heating the preform (3) to a predetermined heating temperature (T);
- introducing the preform (3) into the mould (8);
- drawing the preform (3) by means of a rod (10) displaced at a predetermined drawing speed (V_{E});
- at a predetermined instant, called preblowing mark (t_{P}), controlling the opening of a solenoid valve (17) to connect the interior of the preform (3) with a source (15) of gas at a preblowing pressure (P_{P}) and a preblowing flow rate (D_{P}) that are predetermined;
- measuring the pressure (P) prevailing inside the preform (3);
- the method being **characterized in that** it comprises the operations consisting in:
- detecting an instant (t_{M}), corresponding to a local pressure (P) minimum in the preform (3);
- memorizing the instant (t_{M}) at which this pressure minimum occurs as well as the corresponding pressure (P_{M}) prevailing in the preform (3);
- comparing the instant (t_{M}) and the pressure (P_{M}) of the detected minimum with, respectively, a predetermined instant (t_{Mth}) and pressure (P_{Mth}) of a theoretical pressure minimum;
- if the measured minimum and the theoretical minimum do not match, controlling a modification of at least one of the following parameters: preblowing pressure (P_{P}), preblowing flow rate (D_{P}), drawing speed (V_{E}), heating temperature (T).

2. Method according to Claim 1, which comprises, if the instant (t_{M}) and the pressure (P_{M}) of the detected minimum are, respectively, prior to and less than the instant and the pressure of the theoretical minimum, an operation consisting in reducing the heating temperature (T) or the drawing speed (V_{E}).

3. Method according to Claim 1, which comprises, if the instant (t_{M}) and the pressure (P_{M}) of the detected minimum are, respectively, prior to and equal to the instant and the pressure of the theoretical minimum, an operation consisting in reducing the preblowing pressure (P_{P}) or flow rate (D_{P}) .

4. Method according to Claim 3, which comprises an additional operation consisting in reducing the heating temperature (T) or the drawing speed (V_{E}) .

5. Method according to Claim 1, which comprises, if the instant (t_{M}) and the pressure (P_{M}) of the detected minimum are, respectively, prior to and greater than the instant and the pressure of the theoretical minimum, an operation consisting in reducing the preblowing pressure (P_{P}) or flow rate (D_{P}) .

6. Method according to Claim 1, which comprises, if the instant (t_{M}) and the pressure (P_{M}) of the detected minimum are, respectively, equal to and greater than the instant and the pressure of the theoretical minimum, an operation consisting in reducing the preblowing pressure (P_{P}) or flow rate (D_{P}) .

7. Method according to Claim 6, which comprises an additional operation consisting in increasing the heating temperature (T) or the drawing speed (V_{E}).

8. Method according to Claim 1, which comprises, if the instant (t_{M}) and the pressure (P_{M}) of the detected minimum are, respectively, later than and greater than the instant and the pressure of the theoretical minimum, an operation consisting in increasing the heating temperature (T) or the drawing speed (V_{E}).

9. Method according to Claim 1, which comprises, if the instant (t_{M}) and the pressure (P_{M}) of the detected minimum are, respectively, later than and equal to the instant and the pressure of the theoretical minimum, an operation consisting in increasing the preblowing pressure (P_{P}) or flow rate (D_{P}) .

10. Method according to Claim 9, which comprises an additional operation consisting in increasing the heating temperature (T) or the drawing speed (V_{E}).

11. Method according to Claim 1, which comprises, if the instant (t_{M}) and the pressure (P_{M}) of the detected minimum are, respectively, later than and less than the instant and the pressure of the theoretical minimum, an operation consisting in increasing the preblowing pressure (P_{P}) or flow rate (D_{P}) .

12. Method according to Claim 1, which comprises, if the instant (t_{M}) and the pressure (P_{M}) of the detected minimum are, respectively, equal to and less than the instant and the pressure of the theoretical minimum, an operation consisting in increasing the preblowing pressure (P_{P}) or flow rate (D_{P}) .

13. Method according to Claim 12, which comprises an additional operation consisting in reducing the heating temperature (T) or the drawing speed (V_{E}) .

14. Computer program intended to be implemented on a control unit of a machine (1) for manufacturing containers from preforms made of plastic material, which comprises instructions for the implementation of the operations of the method according to one of Claims 1 to 13.
